# FASCICULE DE BREVET EUROPEEN

(11) **EP 2 905 512 B1**
(45) Date de publication et mention de la délivrance du brevet: **17.08.2016**
(21) Numéro de dépôt: 15151706.7
(22) Date de dépôt: 20.01.2015
(51) Int. Cl.: F16H 59/02, F16H 61/36

(54) **Dispositif de commande d'une boîte de vitesses d'un véhicule automobile**
Steuervorrichtung eines Getriebes für Kraftfahrzeug
Device for controlling a gearbox of a motor vehicle

(30) Priorité: 06.02.2014 FR 1450921
(43) Date de publication de la demande: 12.08.2015
(73) Titulaire: PEUGEOT CITROËN AUTOMOBILES SA, 78140 Vélizy-Villacoublay (FR)
(72) Inventeur: Poirrier, Pascal, 70290 Champagney (FR); Saillard, Laurent, 90400 Danjoutin (FR); Cesca, Bruno, 90150 Phaffans (FR); Orhant, Mathieu, 25200 Montbeliard (FR)

(56) Documents cités:
- EP-A2- 2 525 120
- DE-A1-102011 111 090
- FR-A1- 2 909 741
- JP-A- S5 829 030
- JP-A- S5 837 722
- JP-A- H10 166 879

## Description

La présente invention concerne un dispositif de commande d'une boîte de vitesses d'un véhicule automobile.

### ARRIÈRE-PLAN DE L'INVENTION

D'une façon générale, un dispositif de commande d'une boîte de vitesses d'un véhicule automobile comporte : un boîtier dans lequel est monté un levier de commande associé à une rotule ; un doigt de commande fixé à la rotule et s'étendant selon une direction radiale de la rotule ; un organe de renvoi monté sur le boîtier pour pivoter autour d'un axe de renvoi s'étendant perpendiculairement au levier de commande pour une position de repos de celui-ci, et associé de façon articulée au doigt de commande d'une part, et au câble de commande de la boîte de vitesses d'autre part ; un ressort de rappel porté par le boîtier et ayant des branches s'étendant de part et d'autre d'un élément d'appui de rappel monté pour appuyer de façon élastique sur les branches du ressort de rappel lors des mouvements du levier de commande.

Dans les véhicules actuels, l'élément d'appui de rappel est porté par le doigt de commande. En raison du fait que le doigt de commande est fixé à une rotule, l'élément d'appui de rappel se déplace selon des segments de courbes sphériques centrées sur la rotule. Compte tenu du montage du ressort de rappel sur le boîtier, les mouvements du levier de commande provoquent donc un glissement du point contact de l'élément d'appui de rappel avec les branches du ressort de rappel. Pour éviter que ce glissement engendre un bruit il est nécessaire de recouvrir les branches du ressort de rappel par des manchons. Mais ce même frottement provoque une usure des manchons de sorte qu'à terme il en résulte non seulement un bruit de frottement mais également une perte de précision dans le positionnement du levier de commande. Le document JP-A-4101668 79 décrit un dispositif de commande d'une boîte de vitesses d'un véhicule automobile selon le préambule de la revendication 1.

### OBJET DE L'INVENTION

Un but d'invention est de proposer un dispositif de commande d'une boîte de vitesses d'un véhicule automobile qui reste précis et silencieux même après un grand nombre de manoeuvres de sélection de vitesse.

### BRÈVE DESCRIPTION DE L'INVENTION

En vue de la réalisation de ce but, on propose selon l'invention un dispositif de commande d'une boite de vitesses d'un véhicule automobile selon la revendication 1.

Ainsi, du fait de l'implantation de l'élément d'appui de rappel sur l'organe de renvoi, le point de contact de l'élément d'appui de rappel avec les branches du ressort de rappel se déplace dans un plan et à une distance constante de l'axe de renvoi de sorte que ce contact s'effectue pratiquement sans glissement. L'usure des manchons recouvrant les branches du ressort de rappel est donc minimisée.

De préférence, le ressort de rappel comporte des branches qui prennent appui sur l'élément d'appui de rappel de part et d'autre de celui-ci pour une position de repos du levier de commande.

Selon une version avantageuse de l'invention, l'élément d'appui de rappel est disposé d'un côté du doigt de commande opposé à l'axe de renvoi.

On minimise ainsi l'effort nécessaire pour manoeuvrer le levier de commande.

### BRÈVE DESCRIPTION DES DESSINS

D'autres caractéristiques et avantages de l'invention apparaîtront encore à la lecture de la description qui suit d'un mode de réalisation préféré non limitatif de l'invention en référence aux figures ci-jointes parmi lesquelles:
- La figure 1 est une vue en perspective schématique partielle du dispositif de commande de boîte de vitesses selon l'invention,
- La figure 2 est une vue en perspective selon la flèche II de la figure 1, illustrant les éléments mobiles du dispositif selon l'invention.

### DESCRIPTION DETAILLÉE DE L'INVENTION

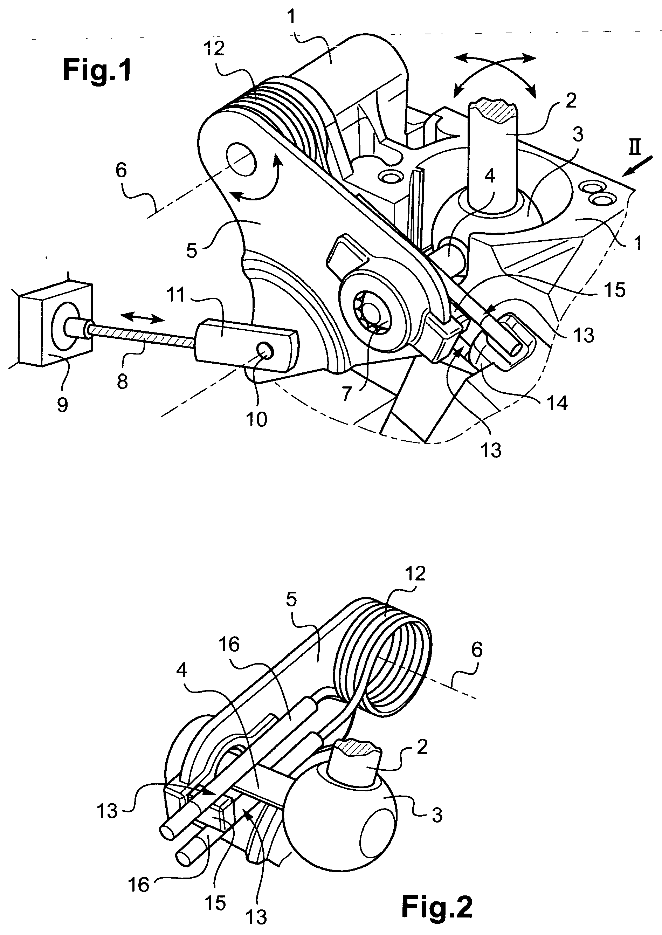

En référence à la figure 1, le dispositif de commande d'une boîte de vitesses illustré comporte de façon connue en soi un boîtier 1 dans lequel est monté un levier de commande 2 associé à une rotule 3. Un doigt de commande 4 est fixé à la rotule et s'étend selon une direction radiale de la rotule. Un organe de renvoi 5 en forme de plaque est monté sur le boîtier pour pivoter autour d'un axe de renvoi 6 qui s'étend perpendiculairement au levier de commande 2 pour une position de repos de celui-ci. L'organe de renvoi 5 est associé de façon articulée à une extrémité du doigt de commande 4. Afin de permettre un mouvement relatif de l'extrémité du doigt de commande par rapport à l'organe de renvoi, le dispositif comporte une pièce élastique 7 interposée entre l'extrémité du doigt de commande 4 et l'organe de renvoi 5. Par ailleurs, le câble de commande 8 de la boîte de vitesses 9 comporte un embout 11 monté de façon articulée autour d'un axe 10 de l'organe de renvoi afin de permettre une transformation du mouvement de pivotement de l'organe de renvoi 5 en un mouvement linéaire de l'organe de commande de boîte de vitesses 8 comme indiqué par des flèches en traits épais sur la figure 1.

Par ailleurs, le dispositif comporte un ressort de rappel du levier de commande vers sa position de repos. Dans le mode de réalisation illustré, le ressort de rappel 12 comporte une série de spires enroulées en hélice autour de l'axe de renvoi 6 et des branches 13 s'étendant de part et d'autre du doigt de commande 4. Le ressort de rappel 12 est verrouillé en rotation par une butée 14 fixée au boitier 1 entre les extrémités des branches 13 du ressort de rappel 12.

Selon l'invention, les branches 13 du ressort de rappel 12 ne sont pas en contact avec le doigt de commande 4 et le dispositif comporte un élément d'appui de rappel 15 porté par l'organe de renvoi 5 et s'étendant entre les branches 13 du ressort 12. L'élément d'appui de rappel 15 a des dimensions appropriées pour être en contact avec les deux branches 13 du ressort de rappel 12 lorsque le levier de commande 2 est au repos. Lors d'une manoeuvre du levier de commande 2, le déplacement du doigt de commande 4 provoque une rotation de l'organe de renvoi 5, ce qui met l'élément d'appui de rappel 15 en appui élastique sur l'une des branches 13 du ressort de rappel 12. Cet appui élastique se fait pratiquement sans glissement de sorte que les manchons protecteurs 16 des branches 13 ne subissent aucune usure.

Comme illustré par la figure 2, dans le mode de réalisation préféré illustré, l'élément d'appui de rappel 15 est disposé d'un côté du doigt de commande 4 opposé à l'axe 6 de l'organe de renvoi 5. Le bras de levier de l'élément d'appui de rappel 15 sur les branches 13 est donc maximum ce qui minimise l'effort à appliquer sur le levier de commande 4 pour faire pivoter l'organe de renvoi 5.

Bien entendu l'invention n'est pas limitée au mode de réalisation décrit et on peut y apporter des variantes de réalisation sans sortir du cadre de l'invention tel que défini par les revendications. En particulier le ressort hélicoïdal 12 peut être remplacé par des lames élastiques fixées au boîtier de part et d'autre de l'élément d'appui de rappel. Le ressort de rappel peut également être constitué d'une simple tige élastique ayant une extrémité fixée au boitier et une extrémité opposée engagée dans un perçage réalisé dans un plot fixé à l'organe de renvoi.

## Revendications

1. Dispositif de commande d'une boite de vitesses d'un véhicule automobile, comportant: un boitier (1) dans lequel est monté un levier de commande (2) associé à une rotule (3); un doigt de commande (4) fixé à la rotule et s'étendant selon une direction radiale de la rotule; un organe de renvoi (5) monté sur le boitier pour pivoter autour d'un axe de renvoi (6) s'étendant perpendiculairement au levier de commande pour une position de repos de celui-ci, et associé de façon articulée au doigt de commande d'une part, et à un organe de commande (8) de la boite de vitesses d'autre part; et un ressort de rappel (12) porté par le boitier et coopérant avec un élément d'appui de rappel disposé pour exercer sur le levier de commande une force tendant à ramener celui-ci vers sa position de repos; l'élément d'appui de rappel (15) étant porté par l'organe de renvoi (5), le ressort de rappel (12) comportant des branches (13), **caractérisé en ce que** les branches (13) s'étendent de part et d'autre du doigt de commande (4) et **en ce que** les branches (13) ne sont pas en contact avec le doigt de commande (4).

2. Dispositif de commande selon la revendication 1 **caractérisé en ce que** les branches (13) prennent appui sur l'élément d'appui de rappel (15) de part et d'autre de celui-ci pour une position de repos du levier de commande.

3. Dispositif de commande selon la revendication 1 ou la revendication 2 **caractérisé en ce que** l'élément d'appui de rappel (15) est disposé d'un côté du doigt de commande (4) opposé à l'axe de renvoi (6).

## Patentansprüche

1. Steuervorrichtung eines Schaltgetriebes eines Kraftfahrzeugs, die Folgendes umfasst: ein Gehäuse (1), in das ein Steuerhebel (2), der mit einem Gelenk (3) assoziiert ist, montiert ist, einen Steuerfinger (4), der an dem Gelenk befestigt ist und sich entlang einer radialen Richtung des Gelenks erstreckt, ein Umlenkorgan (5), das auf das Gehäuse montiert ist, um um eine Umlenkachse (6), die sich senkrecht zu dem Steuerhebel erstreckt, für eine Ruheposition dieses zu schwenken, und das gelenkig mit dem Steuerfinger einerseits und mit einem Steuerorgan (8) des Schaltgetriebes andererseits assoziiert ist, und eine Rückstellfeder (12), die von dem Gehäuse getragen wird und mit einem Rückstellauflageelement zusammenwirkt, das angeordnet ist, um auf den Steuerhebel eine Kraft auszuüben, die dazu tendiert, ihn zu seiner Ruheposition zurückzustellen, wobei das Rückstellauflageelement (15) von dem Umlenkorgan (5) getragen wird, wobei die Rückstellfeder (12) Schenkel (13) umfasst, **dadurch gekennzeichnet, dass** sich die Schenkel (13) zu beiden Seiten des Steuerfingers (4) erstrecken, und dass die Schenkel (13) nicht mit dem Steuerfinger (4) in Berührung sind.

2. Steuervorrichtung nach Anspruch 1, **dadurch gekennzeichnet, dass** die Schenkel (13) auf dem Rückstellauflageelement (15) zu beiden Seiten dieses für eine Ruheposition des Steuerhebels aufliegen.

3. Steuervorrichtung nach Anspruch 1 oder Anspruch 2, **dadurch gekennzeichnet, dass** das Rückstellauflageelement (15) auf einer Seite des Steuerfingers (4), die der Umlenkachse (6) entgegengesetzt ist, angeordnet ist.

## Claims

1. A device for controlling a gearbox of a motor vehicle, comprising: a casing (1) in which there is mounted a control lever (2) associated with a ball joint (3); a control finger (4) fixed to the ball joint and extending along a radial direction of the ball joint; a return member (5) mounted on the casing to pivot about a return axis (6) extending perpendicularly to the control lever for a position of rest thereof, and associated in an articulated manner to the control finger on the one hand, and to a control member (8) of the gearbox on the other hand; and a return spring (12) carried by the casing and cooperating with a return support element disposed to exert on the control lever a force tending to bring the latter back towards its position of rest; the return support element (15) being carried by the return member (5), the return spring (12) comprising branches (13), **characterized in that** the branches (13) extend on either side of the control finger (4) and **in that** the branches (13) are not in contact with the control finger (4).

2. The control device according to Claim 1, **characterized in that** the branches (13) rest on the return support element (15) on either side thereof for a position of rest of the control lever.

3. The control device according to Claim 1 or Claim 2, **characterized in that** the return support element (15) is disposed on a side of the control finger (4) opposed to the return axis (6).
